# EUROPEAN PATENT APPLICATION

(11) **EP 4 835 388 A1**
(43) Date of publication of application: **04.11.2026**
(21) Application number: 24910363.1
(22) Date of filing: 12.11.2024
(51) Int. Cl.: F26B 9/06, H01M 10/04

(54) **VALVE-OPENING DEVICE AND VACUUM OVEN**

(30) Priority: 27.12.2023 CN 202323590830 U
(71) Applicant: Contemporary Amperex Technology Co., Limited, Ningde, Fujian 352100 (CN)
(72) Inventor: RUAN, Guanghui, Ningde, Fujian 352100 (CN); LIU, Yangyang, Ningde, Fujian 352100 (CN)
(74) Representative: Gong, Jinping
(86) International application number: PCT/CN2024/131559
(87) International publication number: WO 2025/139427

(57) **Abstract**

Disclosed in the present application are a valve-opening device and a vacuum oven. The valve-opening device includes a lifting assembly, a support assembly and a valve-opening assembly; the support assembly is arranged on the lifting assembly, and the lifting assembly is configured to drive the support assembly to move in a first direction; and one end of the valve-opening assembly in the first direction is connected to the support assembly, and the other end of the valve-opening assembly is configured to be in contact with a valve body at an electrolyte injection hole in a battery cell. A switching valve at the electrolyte injection hole can be opened under an acting force applied by the valve-opening assembly to the valve body, such that the interior of a case of the battery cell is in communication with a chamber of the vacuum oven, thereby drying the battery cell in a vacuum environment, and improving the production efficiency of battery cells.

## Description

### CROSS-REFERENCE TO RELATED APPLICATIONS

The present application claims priority to Chinese Patent Application 202323590830.8, entitled "VALVE-OPENING DEVICE AND VACUUM OVEN" filed on December 27, 2023, which is incorporated by reference in the present application.

### TECHNICAL FIELD

The present application relates to the technical field of batteries, and specifically relates to a valve-opening device and a vacuum oven.

### BACKGROUND

Battery cells are widely used in electronic devices such as mobile phones, laptops, battery vehicles, electric vehicles, electric planes, electric ships, electric toy cars, electric toy ships, electric toy planes, electric tools, and the like. Battery cells may include nickel-cadmium battery cells, nickel-hydrogen battery cells, lithium ion battery cells, secondary alkaline zinc-manganese battery cells, etc.

Currently, vacuum ovens are mainly used for battery cells with open electrolyte injection holes. For battery cells that have switching valves at the electrolyte injection holes, the lack of valve-opening devices reduces the production efficiency of the battery cells.

### SUMMARY

The embodiments of the present application provide a valve-opening device and a vacuum oven, which can improve the production efficiency of battery cells.

In a first aspect, the embodiment of the present application provides the valve-opening device, and the valve-opening device includes a lifting assembly, a support assembly and a valve-opening assembly; the support assembly is arranged on the lifting assembly, and the lifting assembly is configured to drive the support assembly to move in a first direction; and one end of the valve-opening assembly in the first direction is connected to the support assembly, and the other end of the valve-opening assembly is configured to be in contact with a valve body at an electrolyte injection hole in a battery cell.

In the above solution, the lifting assembly drives the support assembly to move in the first direction, the valve-opening assembly can move along with the support assembly so as to make contact with the valve body at the electrolyte injection hole of the battery cell; a switching valve at the electrolyte injection hole can be opened under an acting force applied by the valve-opening assembly to the valve body, such that the interior of a case of the battery cell is in communication with a chamber of the vacuum oven, thereby drying the battery cell in a vacuum environment, and improving the production efficiency of the battery cell.

In some embodiments, the support assembly includes a frame and a support member, and the frame is connected to the lifting assembly; two ends of the support member are connected to the frame, and the valve-opening assembly is movably arranged on the support member in a second direction; and the first direction intersects with the second direction.

In the above solution, a position of the valve-opening assembly can be adjusted in the second direction so as to adapt to different battery cells.

In some embodiments, a plurality of valve-opening assemblies are arranged on the support member.

By arranging the plurality of valve-opening assembly, a plurality of battery cells can be subjected to valve opening at the same time, thereby further improving the production efficiency of the battery cells.

In some embodiments, a plurality of support members are provided and are arranged at intervals in a third direction; and the third direction intersects with the first direction and the second direction.

By arranging the plurality of support members in the third direction, the number of the valve-opening assemblies is increased, thereby further improving the production efficiency of the battery cells.

In some embodiments, the support member is movably connected to the frame in the third direction.

In the above solution, the support member can move in the third direction so as to adapt to the battery cells of different sizes.

In some embodiments, the lifting assembly includes a fixed rod and a lifting guide rod, and the fixed rod extends in the first direction; and the lifting guide rod is arranged on the fixed rod in a sliding manner in the first direction, and the support assembly is connected to the lifting guide rod.

In the above solution, the lifting guide rod slides relative to the fixed rod in the first direction, which can greatly improve the stability of the valve-opening assembly sliding in the first direction.

In some embodiments, the end, away from the support assembly, of the valve-opening assembly includes a concave portion and a peripheral portion which is arranged on the periphery of the concave portion, and the end, away from the support assembly, of the peripheral portion protrudes relative to the end, away from the support assembly, of the concave portion.

In the above solution, the concave portion is configured to be in contact with the valve body, and the protruded peripheral portion can configured to be in abut against an end cover to limit a valve-opening stroke, such that the switching valve is prevented from being damaged to a certain extent.

In some embodiments, a groove is formed in the end, away from the support assembly, of the concave portion, and a groove mouth communicating with the groove is formed in the peripheral portion.

In the above solution, during heating, gas in the case of the battery cell can flow to a vacuum chamber through the groove and the groove mouth, so as to realize vacuum drying.

In some embodiments, the valve-opening assembly includes a connecting portion, an elastic portion and a telescopic rod, and the connecting portion is connected to the support assembly; the elastic portion is telescopically arranged on the connecting portion in the first direction; and the telescopic rod is arranged at the end, away from the connecting portion, of the elastic portion and is configured to be in contact with the valve body at the electrolyte injection hole of the battery cell.

In the above solution, a telescopic portion stretches out and draws back in the first direction to adapt to height adjustment of the battery cell, thus improving the valve-opening precision of the valve-opening device.

In some embodiments, the connecting portion is arranged around the periphery of the elastic portion, and a part of the telescopic rod is positioned in the connecting portion.

In the above solution, the elastic portion and the telescopic rod are protected by the connecting portion, so that the reliability of the valve-opening assembly is improved.

In a second aspect, the embodiment of the present application provides the vacuum oven, and the vacuum oven includes a box body and the valve-opening device in any embodiment above. The box body is provided with a vacuum chamber; and the valve-opening device is arranged in the vacuum chamber.

In some embodiments, the box body is provided with an in-place sensor which is configured to determine a position of the valve-opening assembly of the valve-opening device.

In the above solution, a lifting stroke of the valve-opening assembly can be monitored by the in-place sensor, and therefore the valve opening precision of the valve-opening device can be further improved.

The above description is only an overview of the technical solution of the present application, and in order to be able to understand more clearly the technical means of the present application, it can be implemented in accordance with the contents of the description, and in order to make the characteristics and advantages of the present application more obvious and easy to understand, the specific embodiments of the present application are listed below.

### BRIEF DESCRIPTION OF THE DRAWINGS

In order to more clearly illustrate the technical solution of the embodiments of the present application, the accompanying drawings that need to be used in the embodiments of the present application will be briefly introduced below, and it is obvious that the accompanying drawings described below are only some embodiments of the present application, and for those skilled in the art, other accompanying drawings can also be obtained according to the accompanying drawings without paying creative labor.
FIG. 1 is an exploded schematic diagram of a battery according to some embodiments of the present application;
FIG. 2 is a schematic structural diagram of a valve-opening device according to some embodiments of the present application;
FIG. 3 is a schematic structural diagram of a vacuum oven according to some embodiments of the present application;
FIG. 4 is a schematic structural diagram of an un-opened switching valve at an electrolyte injection hole according to some embodiments of the present application;
FIG. 5 is a schematic structural diagram of an opened switching valve at an electrolyte injection hole according to some embodiments of the present application;
FIG. 6 is a schematic structural diagram of a valve-opening device according to some embodiments of the present application;
FIG. 7 is a schematic structural diagram of a valve-opening assembly according to some embodiments of the present application; and
FIG. 8 is a partial schematic structural diagram of a valve-opening assembly according to some embodiments of the present application.

Reference numerals:
20, battery cell; 21, end cover; 22, case; 23, electrode assembly; 26, electrode terminal; 27, electrolyte injection hole; 28, switching valve; 281, valve body; 282, valve sleeve; 283, fixing section; 284, telescopic section; 285, sealing section; 100, valve-opening device; 10, lifting assembly; 11, fixed rod; 12, lifting guide rod; 30, support assembly; 31, frame; 32, support member; 40, valve-opening assembly; 41, concave portion; 411, groove; 42, peripheral portion; 421, groove mouth; 43, connecting portion; 44, elastic portion; 45, telescopic rod; 1000, vacuum oven; 200, box body; X, first direction; Y, second direction; and Z, third direction.

### DETAILED DESCRIPTION

The implementations of the present application are further described in detail below with reference to the accompanying drawings and embodiments. The following detailed description of the embodiments and the accompanying drawings are used to illustrate the principles of the present application by way of example, but should not be used to limit the scope of the present application, that is, the present application is not limited to the described embodiments.

In the description of the present application, it needs to be noted that unless otherwise specified, "plurality of" means two or more; and the directions or position relationships indicated by the terms "above", "below", "left", "right", "inner", "outer", etc., are only provided to facilitate the description of the present application and simplify the description, rather than indicating or implying that the apparatus or element referred to must have a specific direction, or be constructed and operated in a specific direction, and therefore cannot be construed as limiting the present application. In addition, the terms such as "first," "second" and "third" are only for the purpose of description, and shall not be construed as indicating or implying relative importance. "Vertical" is not vertical in the strict sense, but is within the margin of error allowed. "Parallel" is not strictly parallel, but within an allowable range of an error.

The reference to "embodiments" in the present application means that specific features, structures or characteristics described with reference to embodiments may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described in the present application may be combined with other embodiments.

The positional terms in the following description correspond to the directions shown in the figure and are not intended to limit the specific structure of the present application. In the description of the present application, it needs to be further noted that, unless otherwise expressly specified and limited, terms "mounted," "connected," and "connection" should be understood in a broad sense, for example, as a fixed connection, as a detachable connection, or as an integral connection; and as a direct connection, as an indirect connection through an intermediate medium. For those of ordinary skill in the art, the specific meaning of the above terms in the present application may be understood on a case-by-case basis.

In the present application, the battery cell may include a lithium-ion secondary battery, a lithium-ion primary battery, a lithium-sulfur battery, a sodium-lithium-ion battery, a sodium-ion battery or a magnesium-ion battery, etc., which are not limited in these embodiments of the present application. The battery cell may be in a cylindrical shape, a flat shape, a cuboid shape or another shape, which is also not limited in the embodiments of the present application. Battery cells are generally divided into three types according to encapsulating manners: cylindrical battery cells, square battery cells, and pouch cells, which are also not limited in the embodiments of the present application.

The battery mentioned in the embodiments of the present application refers to a single physical module including one or a plurality of battery cells to provide a higher voltage and capacity. For example, the battery mentioned in the present application may include a battery module, a battery pack, or the like. The battery generally includes a box body for encapsulating one or more battery cells. The box can prevent liquid or other foreign matters from affecting charging or discharging of the battery cells.

The battery cell includes an electrode assembly and an electrolytic solution, and the electrode assembly is composed of a positive electrode plate, a negative electrode plate, and a separator. The operation of the battery cell mainly relies on the movement of metal ions between the positive electrode plate and the negative electrode plate. The positive electrode plate includes a positive electrode current collector and a positive electrode active material layer. The surface of the positive electrode current collector is coated with the positive electrode active material layer. Current collectors not coated with the positive electrode active material layer protrude from the current collector coated with the positive electrode active material layer. The current collector not coated with the positive electrode active material layer is stacked and serves as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer. The negative electrode active material layer is coated on a surface of the negative electrode current collector. The current collector not coated with the negative electrode active material layer protrudes from the current collector coated with the negative electrode active material layer. The current collector not coated with the negative electrode active material layer is stacked and serves as a negative tab. The material of the negative electrode current collector may be copper, and the negative electrode active material may be carbon, silicon, etc. The material of the insulation film may be PP (polypropylene) or PE (polyethylene) and the like. In addition, the electrode assembly may be of a winding structure or a laminated structure, and the embodiment of the present application is not limited to the above.

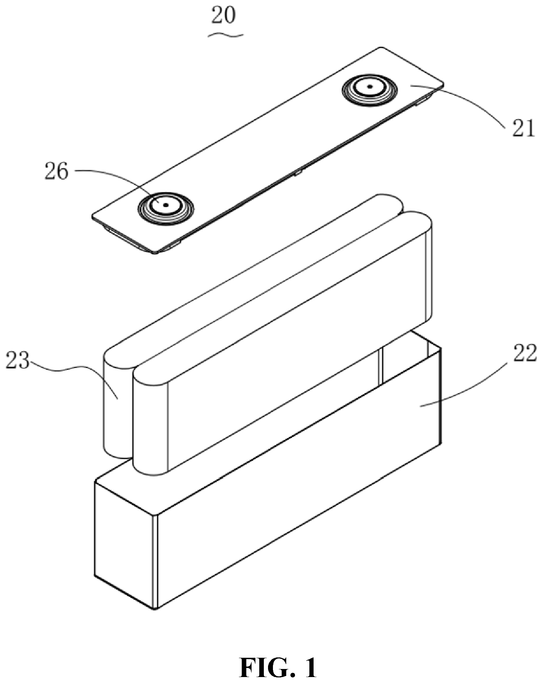

With reference to FIG. 1, FIG. 1 is an exploded structural diagram of a battery cell 20 provided by some embodiments of the present application. The battery cell 20 refers to a minimum unit forming the battery. As shown in FIG. 1, the battery cell 20 includes an end cover 21, a case 22, an electrode assembly 23 and other functional components.

The end cover 21 refers to a component which covers an opening of the case 22 to isolate an internal environment of the battery cell 20 from an external environment. Without limitation, the shape of the end cover 21 may be adapted to the shape of the case 22 to fit the case 22. Optionally, the end cover 21 can be made of a material (such as aluminum alloy) with certain hardness and strength, so that the end cover 21 is not easy to deform when being extruded and collided, the battery cell 20 can have higher structural strength, and the reliability can be improved. The end cover 21 may be provided with functional components such as an electrode terminal 26. The electrode terminal 26 can be electrically connected to the electrode assembly 23 to output or input the electric energy of the battery cell 20. In some optional embodiments, a pressure relief mechanism configured to relieve the internal pressure when the internal pressure or temperature of the battery cell 20 reaches a threshold can be further arranged on the end cover 21. The material of the end cover 21 includes but is not limited to copper, iron, aluminum, stainless steel, aluminum alloy, plastic, etc. In some embodiments, an insulating member also can be arranged at the inner side of the end cover 21, and the insulating member can be configured to isolate an electric connection part in the case 22 from the end cover 21, so that the risk of short circuit is reduced. Exemplarily, the insulating member can be made of plastic, rubber and the like.

The case 22 is an assembly matched with the end cover 21 to form the internal environment of the battery cell 20, and the formed internal environment can be used for accommodating the electrode assembly 23, the electrolyte and other components. The case 22 and the end cover 21 can be independent components; an opening can be formed in the case 22; and the end cover 21 covers the opening at the opening position to form the internal environment of the battery cell 20. In some examples, the case 22 is of a hollow structure with one side opened, and one end cover 21 can be arranged and cover the opening of the case 22. In some other examples, the case 22 can be of a hollow structure with both sides opened, and two end covers 21 are arranged and respectively cover two openings of the case 22. The end cover 21 and the case 22 can also be integrated without limitation. Specifically, the end cover 21 and the case 22 can form a common connection surface before placing other components in the case, and when sealing the inner portion of the case 22, the end cover 21 covers the case 22. The case 22 may be in various shapes and sizes, such as a cuboid, a cylinder, or a hexagonal prism. Specifically, the shape of the shell 22 may be determined depending on the specific shape and size of the electrode assembly 23. The materials of the case 22 can be various, including but not limited to copper, iron, aluminum, stainless steel, aluminum alloy, plastic, etc.

Each battery cell 20 can be a secondary battery or a primary battery, and can also be a lithium-sulfur battery, a sodium-ion battery or a magnesium-ion battery, but not limited thereto. The battery cell 20 can be in a cylinder shape, a flat body shape, a cuboid shape or other shapes.

During a manufacturing process of battery cells, there are usually some air, moisture and other gases in the battery cells. These gases may have a negative impact on performances and service lives of the battery cells. By placing the battery cells in a vacuum oven and vacuumizing, these gases can be effectively eliminated, ensuring a relatively dry and gas-free environment in the battery cells. After vacuumizing in the vacuum oven, electrolytes can be promoted to better penetrate into microscopic gaps of positive and negative electrode materials of the battery cells, which is helpful to improve the performances and efficiency of the battery cells. At present, conventional vacuum ovens are mainly aimed at the battery cells with electrolyte injection holes opened, but for the battery cells with switching valves at the electrolyte injection holes, it is needed to open the switching valves, and then carry out the steps of heating and vacuumizing. Due to the lack of a valve-opening device, the production efficiency of battery cells is reduced.

In view of the above, the present application provides a technical solution, and in the technical solution, a lifting assembly drives a support assembly to move in a first direction, a valve-opening assembly can move along with the support assembly so as to make contact with a valve body at an electrolyte injection hole of a battery cell; a switching valve at the electrolyte injection hole can be opened under an acting force applied by the valve-opening assembly to the valve body, such that the interior of a case of the battery cell is in communication with a chamber of a vacuum oven, thereby drying the battery cell in a vacuum environment, and improving the production efficiency of the battery cell.

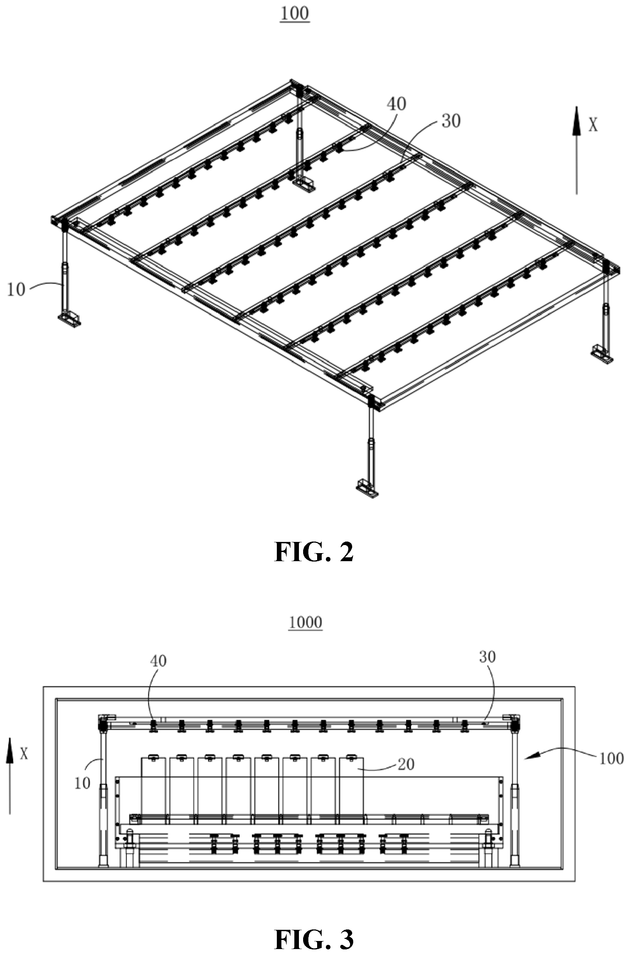

FIG. 2 is a schematic structural diagram of a valve-opening device according to some embodiments of the present application; and FIG. 3 is a schematic structural diagram of a vacuum oven according to some embodiments of the present application.

In combination with FIG. 2 and FIG. 3, in a first aspect, the embodiment of the present application provides a valve-opening device 100, and the valve-opening device 100 includes lifting assemblies 10, support assemblies 30 and valve-opening assemblies 40; the support assemblies 30 are arranged on the lifting assemblies 10, and the lifting assemblies 10 are configured to drive the support assemblies 30 to move in a first direction X; and one end of each valve-opening assembly 40 in the first direction X is connected to the corresponding support assembly 30, and the other end of each valve-opening assembly 40 is configured to be in contact with a valve body 281 at an electrolyte injection hole 27 in a battery cell 20.

The valve-opening device 100 is arranged in a vacuum chamber of a vacuum oven 1000. The lifting assemblies 10 can drive the support assemblies 30 to move in the first direction X by a plurality of ways such as an air cylinder, an electric cylinder, a cam, a connecting rod and a gear. The support assemblies 30 can be of a frame 31 structure or a plate-shaped structure. The first direction X can be a height direction of the battery cell 20.

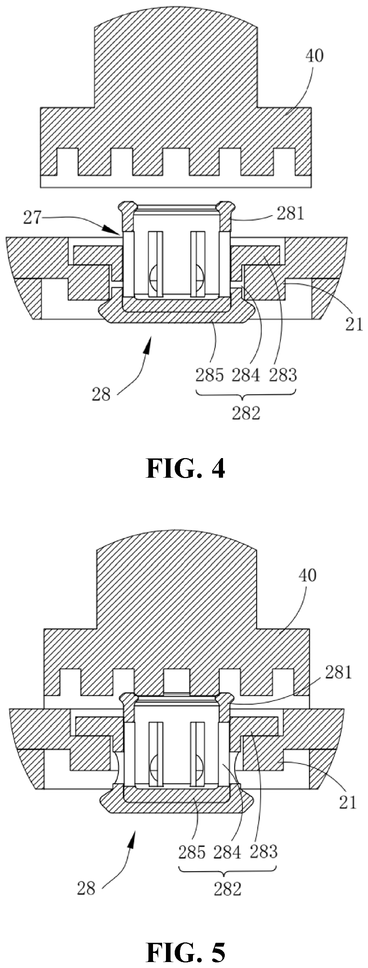

FIG. 4 is a schematic structural diagram of an un-opened switching valve at an electrolyte injection hole according to some embodiments of the present application; and FIG. 5 is a schematic structural diagram of an opened switching valve at an electrolyte injection hole according to some embodiments of the present application.

In combination with FIG. 4 and FIG. 5, a switching valve 28 at the electrolyte injection hole 27 of the battery cell 20 can include a valve body 281 and a valve sleeve 282; the valve body 281 is inserted into the valve sleeve 282; the valve sleeve 282 includes a fixing section 283, a telescopic section 284 and a sealing section 285 which are sequentially connected; and the fixing section 283 and an end cover 21 are fixed along an edge of the electrolyte injection hole 27. When the switching valve 28 is in a closed state, the telescopic section 284 is in a compressed state, the sealing section 285 is close to the fixing section 283, and the sealing section 285 is in contact with the end cover 21 to seal the electrolyte injection hole 27. When the lifting assemblies 10 drive the support assemblies 30 to move downwards, and the valve-opening assemblies 40 are in contact with the valve body 281 and generate a downward acting force on the valve body 281, the valve body 281 applies a downward acting force to the sealing section 285 to gradually extend the telescopic section 284, then the sealing section 285 is gradually away from the fixing section 283 and separated from the end cover 21, thereby a through hole of the telescopic section 284 is exposed, and gas in a case 22 can enter a through hole of the valve body 281 through the through hole of the telescopic section 284 and then flows out of the case 22.

After baking, the valve-opening assemblies 40 move upwards, and after the valve-opening device 100 is in place, a step of vacuum breaking is carried out, thus it is ensured that the switching valve 28 of the battery cell 20 is in a closed state to a certain extent, the interior of the battery cell 20 is in a vacuum state, and then gas is injected into the vacuum chamber to break vacuum to normal pressure.

In the above solution, the lifting assemblies 10 drive the support assemblies 30 to move in the first direction X, the valve-opening assemblies 40 can move along with the support assemblies 30 so as to make contact with the valve body 281 at the electrolyte injection hole 27 of the battery cell 20; the switching valve 28 at the electrolyte injection hole 27 can be opened under an acting force applied by the valve-opening assemblies 40 to the valve body 281, such that the interior of the case 22 of the battery cell 20 is in communication with the chamber of the vacuum oven 1000, thereby drying the battery cell 20 in a vacuum environment, and improving the production efficiency of the battery cell 20.

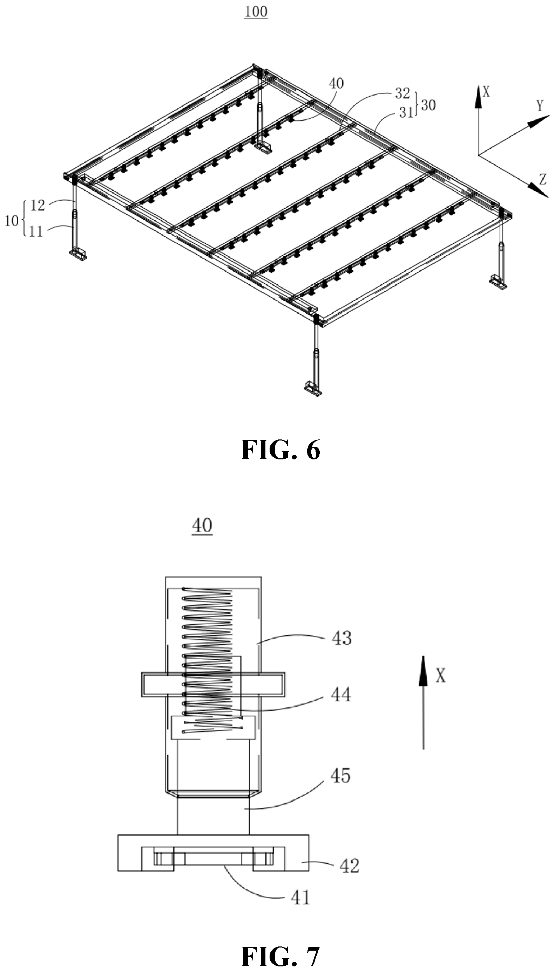

FIG. 6 is a schematic structural diagram of a valve-opening device according to some embodiments of the present application.

As shown in FIG. 6, in some embodiments, the support assemblies 30 include frames 31 and support members 32, and the frames 31 are connected to the lifting assemblies 10; two ends of the support members 32 are connected to the frames 31, and the valve-opening assemblies 40 are movably arranged on the support members 32 in a second direction Y; and the first direction X intersects with the second direction Y.

The frames 31 can be in a rectangular shape or a square shape or other polygonal shapes. The support members 32 can be of structures such as supporting rods or supporting columns. The second direction Y can be a thickness direction of the battery cell 20. The valve-opening assemblies 40 can be movably connected to the support members 32 by slide blocks or buckles or other modes. For battery cells 20 with different thicknesses, positions of the valve-opening assemblies 40 can be adjusted in the second direction Y.

In the above solution, the positions of the valve-opening assemblies 40 can be adjusted in the second direction Y so as to adapt to different battery cells 20.

In some embodiments, a plurality of valve-opening assemblies 40 are arranged on the support members 32.

The plurality of valve-opening assemblies 40 can be arranged at intervals and can move in the first direction X, and therefore a space between every two adjacent valve-opening assemblies 40 can be adjusted so as to adapt to the battery cells 20 with different thicknesses.

According to the embodiment of the present application, the plurality of valve-opening assemblies 40 are arranged, accordingly valve opening can be performed on the plurality of battery cells 20 at the same time, thereby further improving the production efficiency of the battery cells 20.

In some embodiments, a plurality of support members 32 are provided and are arranged at intervals in a third direction Z; and the third direction Z intersects with the first direction X and the second direction Y.

The third direction Z can be a length direction of the battery cells 20; and according to the embodiment of the present application, the plurality of support members 32 are arranged in the third direction Z, accordingly the number of the valve-opening assemblies 40 is increased, thereby further improving the production efficiency of the battery cells 20.

In some embodiments, the support members 32 are movably connected to the frames 31 in the third direction Z.

The support members 32 can be connected to the frames 31 through the slide blocks, buckles and the like so that the support members 32 can move in the third direction Z. For battery cells 20 with different lengths, the position of each support member 32 can be adjusted, and therefore the valve-opening assemblies 40 can be right located over the electrolyte injection hole 27.

In the above solution, the support members 32 can move in the third direction Z so as to adapt to the battery cells 20 of different sizes.

In some embodiments, the lifting assemblies 10 include fixed rods 11 and lifting guide rods 12, and the fixed rods 11 extend in the first direction X; and the lifting guide rods 12 are arranged on the fixed rods 11 in a sliding mode in the first direction X, and the support assemblies 30 are connected to the lifting guide rods 12.

Air cylinders, electric cylinders and the like can be adopted for being connected to the lifting guide rods 12 to drive the lifting guide rods 12 to slide along the fixed rods 11. The lifting assemblies 10 can be arranged in a plurality of corner areas of the frames 31 of the support assemblies 30 respectively, so that the support assemblies 30 are supported by the lifting assemblies 10, and the plurality of lifting assemblies 10 can stably drive the support assemblies 30 to move in the first direction X.

In the above solution, the lifting guide rods 12 slide relative to the fixed rods 11 in the first direction X, and therefore the stability of the valve-opening assemblies 40 sliding in the first direction X can be improved.

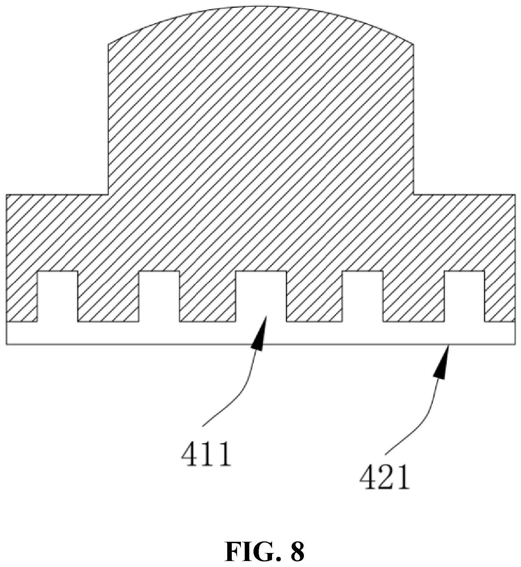

FIG. 7 is a schematic structural diagram of a valve-opening assembly according to some embodiments of the present application; and FIG. 8 is a partial schematic structural diagram of a valve-opening assembly according to some embodiments of the present application.

In combination with FIG. 7 and FIG. 8, in some embodiments, the ends, away from the support assemblies 30, of the valve-opening assemblies 40 include concave portions 41 and peripheral portions 42 which are arranged on the peripheries of the concave portions 41, and the ends, away from the support assemblies 30, of the peripheral portions 42 protrude relative to the ends, away from the support assemblies 30, of the concave portions 41.

After the battery cell 20 enters the vacuum oven 1000, the support assemblies 30 downwards move to drive the valve-opening assemblies 40 to move downwards, the concave portions 41 extrude the valve body 281, the valve body 281 presses a valve sleeve 282 downwards to realize valve opening, then the valve-opening assemblies 40 further move downwards, and the peripheral portions 42 of the valve-opening assemblies 40 are in contact with the end cover 21. A deformation amount of the telescopic section 284 of the valve sleeve 282 meets the valve opening requirement. A valve-opening stroke of the switching valve 28 is determined by a concaving depth of the concave portions 41 of the valve-opening assemblies 40 relative to the peripheral portions 42, and the peripheral portions 42 are in contact with the end cover 21 during valve opening.

Outer diameters of the concave portions 41 are larger than that of the valve body 281, and thus a position deviation, caused by position fluctuation of the battery cell 20, of the valve body 281 can be compatible.

In the above solution, the concave portions 41 are configured to be in contact with the valve body 281, the protruded peripheral portions 42 can configured to be in abut against the end cover 21 so as to limit the valve-opening stroke, such that the switching valve 28 can be prevented from being damaged to a certain extent.

In some embodiments, grooves 411 are formed in the ends, away from the support assemblies 30, of the concave portions 41, and groove mouths 421 communicating with the grooves 411 are formed in the peripheral portions 42.

A plurality of grooves 411 can be formed in the ends of the concave portions 41, and the grooves 411 penetrate the concave portions 41 and communicate with the groove mouths 421. During heating, gas in the case 22 of the battery cell 20 can flow to a vacuum chamber through the grooves 411 and the groove mouths 421, so as to realize vacuum drying.

In some embodiments, the valve-opening assemblies 40 include connecting portions 43, elastic portions 44 and telescopic rods 45, and the connecting portions 43 are connected to the support assemblies 30; the elastic portions 44 are telescopically arranged on the connecting portions 43 in the first direction X; and the telescopic rods 45 are arranged at the ends, away from the connecting portions 43, of the elastic portions 44 and configured to be in contact with the valve body 281 at the electrolyte injection hole 27 of the battery cell 20.

The elastic portions 44 can be of a structure such as a spring that can deform. In order to be compatible with the height difference of the battery cell 20, the valve body 281 and the like, after the peripheral portions 42 of the valve-opening assemblies 40 are in contact with the end cover 21, the valve-opening assemblies 40 continue to move downwards by a certain distance, and because the elastic portions 44 have a certain compression amount, the overpressure amount of the valve-opening assemblies 40 can be absorbed by the elastic portions 44, and thus the effective compression amount of the elastic portions 44 is larger than the maximum overpressure amount of the valve-opening assemblies 40. When the stroke of the switching valve 28 meets the requirement, the pressure of the valve-opening assemblies 40 is greater than the maximum bounce of the valve sleeve 282.

In the above solution, a telescopic portion stretches out and draws back in the first direction X to adapt to height adjustment of the battery cell 20, thus improving the valve-opening precision of the valve-opening device 100.

In some embodiments, the connecting portions 43 are arranged around the peripheries of the elastic portions 44, and part of the telescopic rods 45 are located in the connecting portions 43.

The connecting portions 43 are in a sleeve shape, the elastic portions 44 are accommodated in the connecting portions 43, part of the telescopic rods 45 are accommodated in the connecting portions 43, and the other part of the telescopic rods 45 extend out of the connecting portions 43. The elastic portions 44 and the telescopic rods 45 are protected by the connecting portions 43, and thus the reliability of the valve-opening assemblies 40 is improved.

In a second aspect, the embodiment of the present application provides a vacuum oven 1000 which includes a box body and the valve-opening device 100 in any embodiment above. The box body is provided with a vacuum chamber; and the valve-opening device 100 is arranged in the vacuum chamber.

In some embodiments, an in-place sensor is arranged on the box body and configured to determine the positions of the valve-opening assemblies 40 of the valve-opening device 100.

The in-place sensor is a device configured to detect whether an object reaches a set position and to output a signal, and is also called as a position sensor, a limiter and the like. The lifting strokes of the valve-opening assemblies 40 can be monitored by the in-place sensor, and therefore the valve opening precision of the valve-opening device 100 is further improved.

According to some embodiments of the present application, the present application provides the valve-opening device 100, and the valve-opening device 100 includes the lifting assemblies 10, the support assemblies 30 and the valve-opening assemblies 40, the support assemblies 30 are arranged on the lifting assemblies 10, and the lifting assemblies 10 are configured to drive the support assemblies 30 to move in the first direction X; and one end of each valve-opening assembly 40 in the first direction X is connected to the corresponding support assembly 30, and the other end of each valve-opening assembly 40 is configured to be in with the valve body 281 at the electrolyte injection hole 27 of the battery cell 20. The ends, away from the support assemblies 30, of the valve-opening assemblies 40 include the concave portions 41 and the peripheral portions 42 which are arranged on the peripheries of the concave portions 41, and the ends, away from the support assemblies 30, of the peripheral portions 42 protrude relative to the ends, away from the support assemblies 30, of the concave portions 41.

Finally, it is to be noted that the above embodiments are only used for illustrating the technical solutions of the present application, not to limit them, and although the present application is described in detail with reference to the foregoing embodiments, those of ordinary skill in the art should understand that it may still modify the technical solutions described in the foregoing embodiments, or replace some or all of the technical features therein, and these modifications or substitutions do not make the essence of the corresponding technical solutions out of the scope of the technical solutions of the embodiments of the present application, and they should be covered by the scope of the claims and description of the present application. In particular, the technical features mentioned in the various embodiments can be combined in any manner as long as there is no structural conflict. The present application is not limited to the specific embodiments disclosed herein, but includes all technical solutions that fall within the scope of the claims.

## Claims

1. A valve-opening device, comprising:
a lifting assembly;
a support assembly which is arranged on the lifting assembly, the lifting assembly being configured to drive the support assembly to move in a first direction; and
a valve-opening assembly, one end of the valve-opening assembly in the first direction being connected to the support assembly, and the other end of the valve-opening assembly being configured to be in contact with a valve body at an electrolyte injection hole in a battery cell.

2. The valve-opening device according to claim 1, wherein the support assembly comprises:
a frame connected to the lifting assembly; and
support members, two ends of the support members being connected to the frame, the valve-opening assembly being movably arranged on the support members in a second direction, wherein the first direction intersects with the second direction.

3. The valve-opening device according to claim 2, wherein a plurality of valve-opening assemblies are arranged on the support members.

4. The valve-opening device according to claim 2, wherein a plurality of support members are provided and are arranged at intervals in a third direction; and the third direction intersects with the first direction and the second direction.

5. The valve-opening device according to claim 4, wherein the support members are movably connected to the frame in the third direction.

6. The valve-opening device according to any one of claims 1 to 5, wherein the lifting assembly comprises:
a fixed rod which extends in the first direction; and
a lifting guide rod which is arranged on the fixed rod in a sliding manner in the first direction, the support assembly being connected to the lifting guide rod.

7. The valve-opening device according to claim 1, wherein the end, away from the support assembly, of the valve-opening assembly comprises:
a concave portion; and
a peripheral portion which is arranged on the periphery of the concave portion, the end, away from the support assembly, of the peripheral portion protruding relative to the end, away from the support assembly, of the concave portion.

8. The valve-opening device according to claim 7, wherein a groove is formed in the end, away from the support assembly, of the concave portion, and a groove mouth communicating with the groove is formed in the peripheral portion.

9. The valve-opening device according to claim 1, wherein the valve-opening assembly comprises:
a connecting portion which is connected to the support assembly;
an elastic portion which is telescopically arranged on the connecting portion in the first direction; and
a telescopic rod which is arranged at the end, away from the connecting portion, of the elastic portion and is configured to be in contact with the valve body at the electrolyte injection hole of the battery cell.

10. The valve-opening device according to claim 9, wherein the connecting portion is arranged around the periphery of the elastic portion, and a part of the telescopic rod is positioned in the connecting portion.

11. A vacuum oven, comprising:
a box body which is provided with a vacuum chamber; and
the valve-opening device according to any one of claims 1 to 10, the valve-opening device being arranged in the vacuum chamber.

12. The vacuum oven according to claim 11, wherein the box body is provided with an in-place sensor which is configured to determine a position of the valve-opening assembly of the valve-opening device.
